# EUROPEAN PATENT APPLICATION

(11) **EP 3 085 564 A1**
(43) Date of publication of application: **26.10.2016**
(21) Application number: 16165638.4
(22) Date of filing: 15.04.2016
(51) Int. Cl.: B60K 11/08

(54) **GRILLE SHUTTER APPARATUS**

(30) Priority: 24.04.2015 JP 2015089597
(71) Applicant: Aisin Seiki Kabushiki Kaisha, Kariya-shi Aichi-ken, 448-8650 (JP)
(72) Inventor: HORI, Kenji, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

A grille shutter apparatus (10) includes: a plurality of movable fins (11) that are arranged in parallel and are respectively rotatably supported; a first link mechanism (26L, 26R) that is independently provided between two adjacent movable fins and forms a series driving force transmission path of both movable fins; a driving section (13) that is provided at one end of the series driving force transmission path and drives the plurality of movable fins to be rotated; a control unit (21) configured to control the driving section and detecting an operation state of the driving section; and a second link mechanism (36) that is connected to the one end and the other end of the series driving force transmission path and is moved in conjunction with the one end and the other end by being synchronized therewith.

## Description

### TECHNICAL FIELD

This disclosure relates to a grille shutter apparatus.

### BACKGROUND DISCUSSION

A grille shutter apparatus configured to control a flow rate of air flowing from a grille opening portion into an engine room based on opening and closing operations of a shutter mechanism provided at the grille opening portion arranged at a front portion of a vehicle body is disclosed in the related art. For example, in a grille shutter apparatus described in JP2014-80071A (hereinafter referred to as Reference 1) a shutter mechanism is formed such that a plurality of movable fins are aligned within a frame provided on the inside of a grille opening portion. Then, a flow path formed on the inside of the frame may be opened and closed by rotating each of the movable fins about a rotary shaft by driving a motor. According to such a configuration, for example, in a case in which the vehicle is running at a high speed, an aerodynamic performance (for example, "Cd value" and the like) can be enhanced by limiting an inflow of the air flowing into the inside of the engine room by causing the shutter mechanism to be in a closed state. In addition, when an engine starts, warm-up time of an engine can be shortened by suppressing the flow rate of the air introduced into a radiator. Then, if an engine temperature has a tendency to increase, the engine temperature can be controlled at an appropriate temperature by increasing the flow rate flowing into the engine room by causing the shutter mechanism to be in the closed state.

In addition, in the grille shutter apparatus of the related art described above, a link mechanism independent for every two adjacent movable fins is provided to operate each of the movable fins in conjunction with each other and forms a series driving force transmission path. Then, a pressing section that is operated based on the operation of the movable fins is provided in the furthest end portion of the driving force transmission path and the pressing section is configured to press a detector (for example, a limit switch and the like) provided on a driving section side. The detector is operated and thereby it is possible to confirm whether each of the movable fins is normally operated.

However, according to the configuration described above, in order to confirm the operation state of each of the movable fins, the detector is necessarily required to be provided in the furthest end portion of the driving force transmission path. Therefore, if the detector fails for some reason, it becomes impossible to detect the operation state of each of the movable fins. In addition, the grille shutter apparatus becomes expensive and has a complicated structure by providing the detector and, in this regard, it leaves room for improvement.

### SUMMARY

Thus, a need exists for a grille shutter apparatus in which an operation state of each of movable fins can be accurately confirmed with a simple structure.

A first aspect of thus disclosure is directed to a grille shutter apparatus including a plurality of movable fins that are arranged in parallel and are respectively rotatably supported; a first link mechanism that is independently provided between two adjacent movable fins and forms a series driving force transmission path of both movable fins; a driving section that is provided at one end of the series driving force transmission path and drives the plurality of movable fins to be rotated; a control unit configured to control the driving section and detecting an operation state of the driving section; and a second link mechanism that is connected to the one end and the other end of the series driving force transmission path and is moved in conjunction with the one end and the other end by being synchronized therewith.

According to the configuration described above, the first link mechanism connects the movable fins in series and forms the driving force transmission path. Therefore, it is possible to move the plurality of movable fins in conjunction with each other by driving one end of the driving force transmission path. On the other hand, one end and the other end of the driving force transmission path are connected by the second link mechanism. Therefore, the second link mechanism connects one end and the other end of the driving force transmission path in conjunction with each other by being synchronized therewith without abnormal influence on the operation state such as deflection of each of the movable fins occurring in the driving force transmission path or jamming of foreign matter between the movable fins. Here, since the operation state of one end can be detected by the control unit via the driving section, it is also possible to detect the operation state of the other end moved in conjunction with one end by being synchronized therewith. That is, if the rotation of the movable fins is inhibited by jamming of the foreign matter, the rotation of at least one of one end and the other end of the driving force transmission path is inhibited. Since the operation of the driving section is inhibited, it is possible to detect rotation abnormality of the movable fin. Therefore, it is possible to accurately confirm the operation state of each of the movable fins with a simple structure without a need to provide a detector such as a limit switch on the other end.

A second aspect of this disclosure is directed to the grille shutter apparatus described above, in which the plurality of movable fins, the first link mechanism and the second link mechanism comprise a shatter mechanism; and the control unit includes a determination section that detects the operation state of the driving section by an operation amount of the driving section and determines an operation of the shutter mechanism to be abnormal if the operation amount does not reach a predetermined amount.

According to the configuration described above, it is possible to detect abnormality of the operation state of each of the movable fins by detecting the operation amount of the driving section. Thus, it is possible to accurately detect the operation state of each of the movable fins with a simple structure.

A third aspect of this disclosure is directed to the grille shutter apparatus described above, in which the determination section determines the operation of the shutter mechanism to be abnormal if the operation amount of the driving section does not reach an operation amount corresponding to a fully-open state within a predetermined time from starting of an opening operation of the shutter mechanism and determines the operation of the shutter mechanism to be abnormal if the operation amount of the driving section does not reach an operation amount corresponding to a fully-closed state within a predetermined time from starting of a closing operation of the shutter mechanism.

According to the configuration described above, the determination section can detect fully open and fully close of each of the movable fins only by determining whether or not the operation amount of the driving section reaches the operation amount corresponding to the fully-open state and the fully-closed state.

As described above, according to the aspects of this disclosure, it is possible to accurately confirm the operation state of each of the movable fins with a simple structure.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a configuration of a vehicle on which a grille shutter apparatus according to an embodiment is mounted;
Fig. 2 is a perspective view of the grille shutter apparatus;
Fig. 3 is a front view of the grille shutter apparatus;
Fig. 4 is a control block diagram of the grille shutter apparatus;
Fig. 5 is a flow chart illustrating processing procedures of an opening operation control and of a determination to confirm a fully-open state of a shutter mechanism;
Fig. 6 is an exploded perspective view of the grille shutter apparatus;
Fig. 7 is an explanatory view of a series driving force transmission path formed at the shutter mechanism;
Fig. 8 is an explanatory view of a series driving force transmission path according to another example; and
Fig. 9 is an explanatory view of a series driving force transmission path according to still another example.

### DETAILED DESCRIPTION

Hereinafter, embodiments embodying this disclosure will be described referring to drawings.

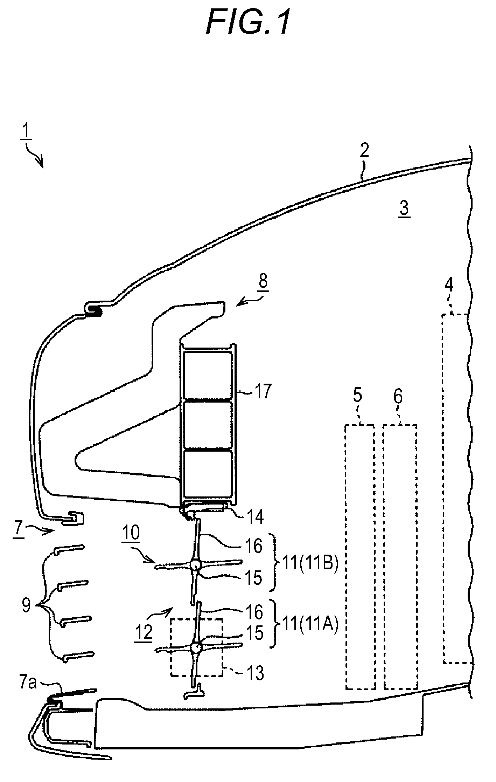

In a vehicle 1 illustrated in Fig. 1, a radiator 5 for cooling an engine 4 is accommodated in an engine room 3 formed on the inside of a vehicle body 2. A grille opening portion 7 communicating an external space at the front of the vehicle and an internal space of the vehicle body 2 is formed at a front portion (left end portion in the view) of the vehicle body 2. Then, the radiator 5 is arranged at the front of the engine 4 such that air that flows from the grille opening portion 7 into the engine room 3 is blowing against the radiator 5.

In addition, a fan 6 is provided on a rear side (right side in the view) of the radiator 5. As the fan 6 rotates, the air efficiently flows to the radiator 5.

In the embodiment, the grille opening portion 7 is formed on a lower side of a bumper 8. In addition, at an opening end 7a of the grille opening portion 7, front grilles 9 providing a design surface (lower grille) are attached. Then, a grille shutter apparatus 10 capable of controlling the flow rate of the air flowing from the grille opening portion 7 into the engine room 3 is provided in the vehicle 1 of the embodiment.

In further detail, the grille shutter apparatus 10 includes a shutter mechanism 12 having a plurality of movable fins 11 and an actuator 13 driving the shutter mechanism 12 to be opened and closed.

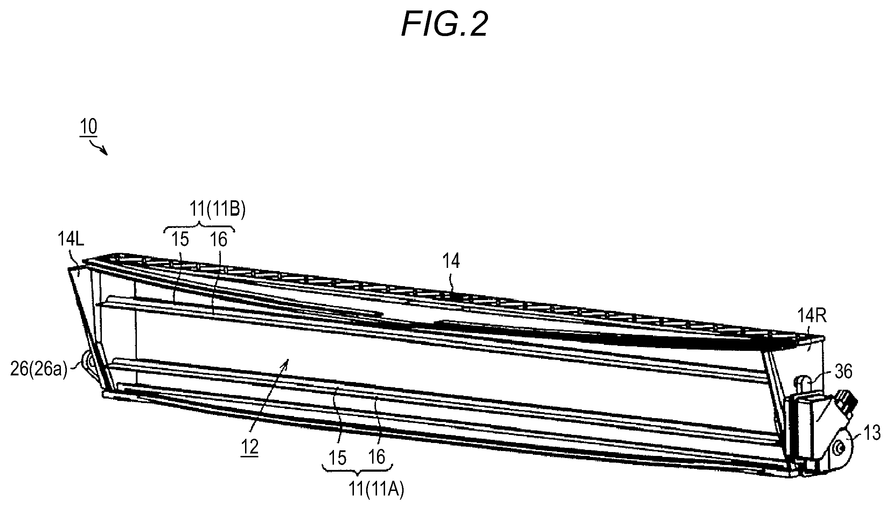

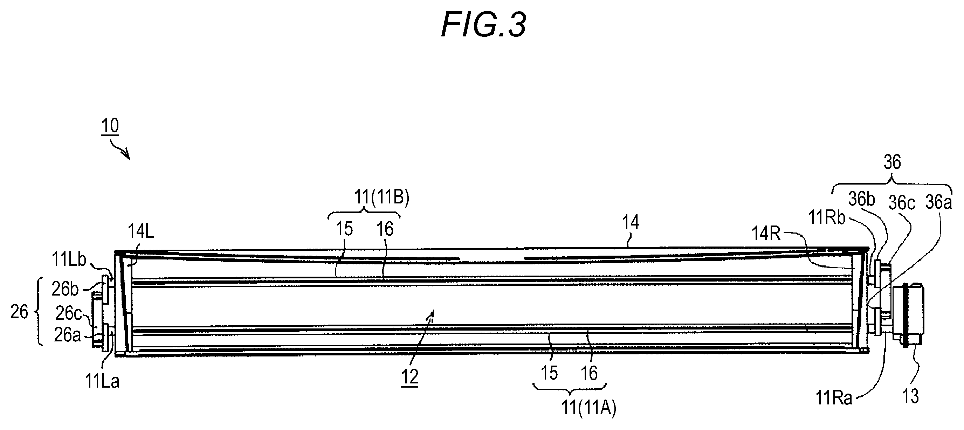

As illustrated in Figs. 2 and 3, the shutter mechanism 12 of the embodiment includes a frame 14 formed in a substantially rectangular shape extending in a width direction of the vehicle body 2. Then, each of the movable fins 11 is rotatably supported within a framework of the frame 14.

In particular, each of the movable fins 11 includes a rotary shaft 15 stretched between sidewall portions 14L and 14R of the frame 14 and is rotatably supported by the rotary shaft 15. In addition, each of the movable fins 11 includes a fin portion 16 which can close the framework of the frame 14 by rotating about the rotary shaft 15. Moreover, the shutter mechanism 12 of the embodiment includes movable fins 11A and 11 B, arranged in two rows parallel to each other in an up-down direction within the framework of the frame 14. Then, as illustrated in Fig. 1, the shutter mechanism 12 of the embodiment is arranged on the inside of the grille opening portion 7 by fixing an upper end of the frame 14 to a bumper reinforce 17.

That is, the shutter mechanism 12 of the embodiment is in an open state by rotating each of the movable fins 11 in a direction (clockwise direction in Fig. 1) to bring the fin portions 16 in parallel with respect to a flow direction of the air flowing from the grille opening portion 7. In addition, the shutter mechanism 12 is in a closed state by rotating each of the movable fins 11 in a direction (counterclockwise direction in Fig. 1) to bring the fin portions 16 perpendicular with respect to the flow direction of the air. Then, if each of the movable fins 11 is in a rotational position corresponding to a fully-closed state, the framework of the frame 14 may be closed by overlapping respective ends (fin ends of the fin portions 16) of each of the movable fins 11 adjacent to each other.

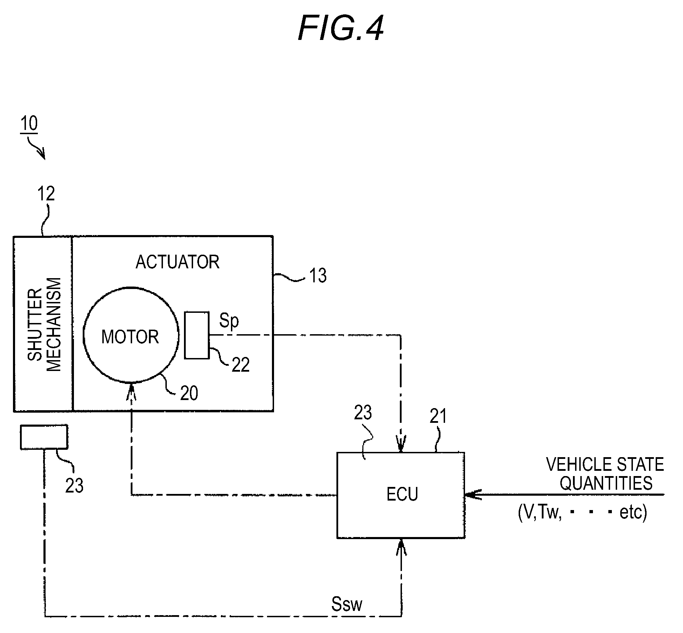

On the other hand, as illustrated in Fig. 4, the actuator 13 drives the shutter mechanism 12 to be opened and closed by rotating each of the movable fins 11 using a motor 20 as a driving source. Then, an operation of the actuator 13 is controlled by an ECU 21 which serves as a control unit.

That is, the ECU 21 controls opening and closing operations of the shutter mechanism 12. Then, the grille shutter apparatus 10 of the embodiment can control the flow rate of the air flowing from the grille opening portion 7 into the engine room 3 based on the opening and closing operations of the shutter mechanism 12 by the rotation of each of the movable fins 11.

In further detail, according to the embodiment, the ECU 21 receives vehicle information signals indicating various vehicle states such as a vehicle speed V and a cooling water temperature Tw of the engine 4. Then, the ECU 21 performs opening and closing control of the shutter mechanism 12 based on the vehicle information signals.

Specifically, the ECU 21 recognizes that an ignition switch of the vehicle 1 is turned on (IG on), that is, the vehicle 1 is either in a driving state or in a state of preparation for driving by starting communication of each of the vehicle information signals via an in-vehicle network (not illustrated). Then, the ECU 21 executes known opening and closing control, for example, to maintain the shutter mechanism 12 in the closed state until the cooling water temperature Tw increases, or to bring the shutter mechanism 12 to the closed state due to an increase in the vehicle speed V.

In addition, according to the embodiment, the ECU 21 is connected to a pulse sensor 22 provided in the actuator 13 and the ECU 21 detects an operation amount of the shutter mechanism 12 based on a pulse signal Sp, which is synchronized with the rotation of the motor 20, input from the pulse sensor 22. In addition, the ECU 21 includes a determination section 23 that determines whether or not the actuator 13 is normally operated based on the operation amount.

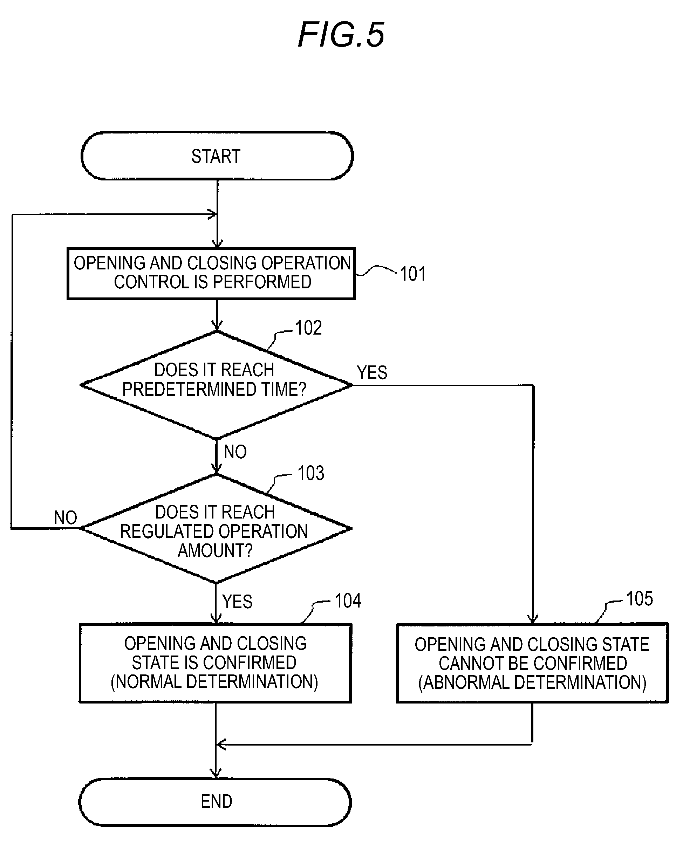

In further detail, as illustrated in the flow chart of Fig. 5, the ECU 21 executes the opening and closing operation control (step 101) of the shutter mechanism 12 until the detected operation amount reaches a regulated operation amount corresponding to the fully-open state or the fully-closed state of the shutter mechanism 12 (step 103: YES) while monitoring a time from starting of the opening operation or the closing operation by the shutter mechanism 12 and monitoring the operation amount of the shutter mechanism 12 detected based on the pulse signal Sp. Then, the determination section 23 determines that the opening and closing operations are normally performed (step 104) if the time from starting of the opening operation or the closing operation by the shutter mechanism 12 is within a predetermined time and the operation amount reaches the regulated operation amount.

On the other hand, the determination section 23 determines that the opening and closing operation control is abnormally performed (step 105) if the time from starting of the opening operation or the closing operation by the shutter mechanism 12 reaches a predetermined time but the operation amount does not reach the regulated operation amount, that is, the shutter mechanism 12 cannot be confirmed to be in the fully-open state or the fully-closed state (step 102: NO). In order to cause the shutter mechanism 12 to be in the fully-open state or the fully-closed state, the opening and closing operation control is executed again. In addition, details of a so-called retry control will be omitted.

### Operation State Confirming Structure

Next, an operation state confirming structure of the shutter mechanism of the embodiment will be described.

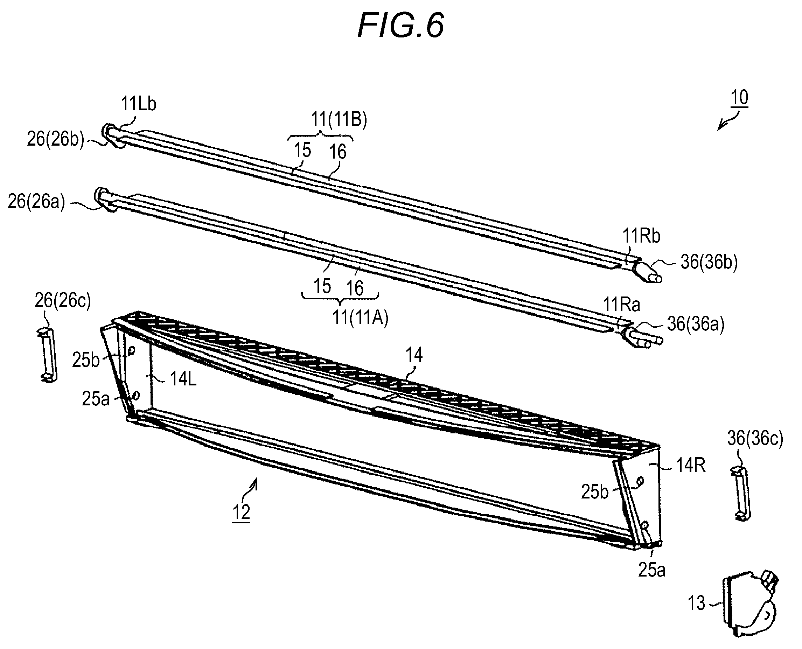

As illustrated in Fig. 6, according to the embodiment, both the sidewall portions 14L and 14R of the frame 14 include two supporting holes 25a and 25b respectively corresponding to each of the movable fins 11 (11A and 11 B) in positions separated from each other in an up-down direction (up-down direction in the view, see Fig. 3). Then, as illustrated in Fig. 3, both end portions of the rotary shaft 15 of each of the movable fins 11A and 11B are inserted into the supporting holes 25a and 25b, respectively, so that the movable fins 11A and 11B are rotatably supported by the frame 14 in a state in which the fin portions 16 are arranged on the inside of the framework.

In addition, the shutter mechanism 12 of the embodiment includes a first link mechanism 26 connecting between shaft end portions 11 La and 11 Lb of each of the movable fins 11A and 11 B. Then, similar to the first link mechanism 26, the shutter mechanism 12 includes a second link mechanism 36 connecting between shaft end portions 11 Ra and 11 Rb of each of the movable fins 11 A and 11 B.

In particular, the first link mechanism 26 has a configuration including a pair of lever members 26a and 26b fixed to the shaft end portions 11 La and 11 Lb of each of the movable fins 11A and 11B protruding to the outside of the framework of the frame 14 in a manner of penetrating the sidewall portion 14L and a link member 26c rotatably connected to the end of each of the shaft end portions 11 La and 11 Lb.

On the other hand, similar to the first link mechanism 26, the second link mechanism 36 has a configuration including a pair of lever members 36a and 36b fixed to the shaft end portions 11 Ra and 11Rb of each of the movable fins 11A and 11B protruding to the outside of the framework of the frame 14 in a manner of penetrating the sidewall portion 14R and a second link member 36c rotatably connected to the end of each of the shaft end portions 11 Ra and 11 Rb.

Then, as illustrated in Fig. 2, the actuator 13 of the embodiment is configured to drive the shaft end portion 11 Ra in the movable fin 11A disposed on a lower row on the outside of the framework by fixing to the sidewall portion 14R of the frame 14.

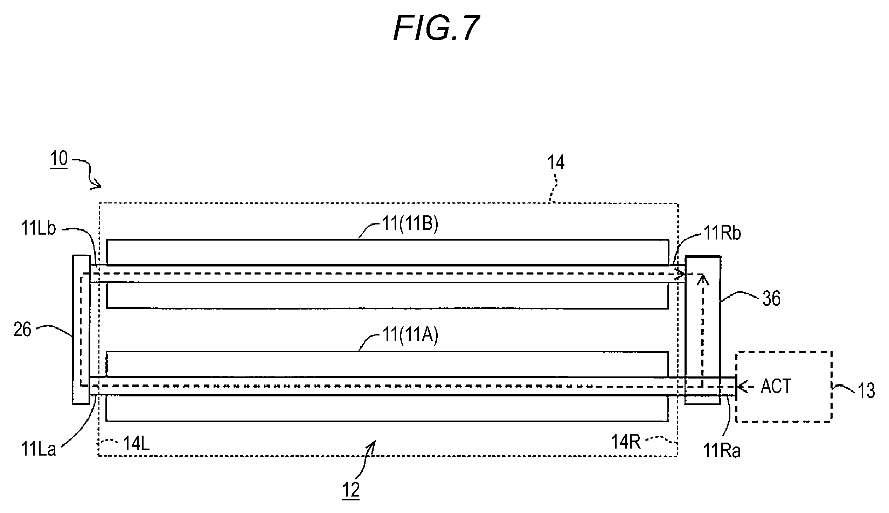

That is, as illustrated in Fig. 7, the shutter mechanism 12 of the embodiment is configured to form a series driving force transmission path from the movable fin 11A arranged at the lower row to the movable fin 11 B arranged at an upper row via the first link mechanism 26. Thus, the movable fins 11A and 11 B are rotated in conjunction with each other based on the driving force transmitted from the shaft end portion 11 Ra on the right side of the movable fin 11A arranged at the lower row to the shaft end portion 11 La on the left side and from the shaft end portion 11 Lb on the left side of the movable fin 11 B arranged at the upper row to the shaft end portion 11 Ra on the right side.

On the other hand, the second link mechanism 36 connects the shaft end portion 11 Ra and the shaft end portion 11 Rb not via the driving force transmission path formed by the first link mechanism 26. Thus, the driving force of the actuator 13 is directly transmitted from the shaft end portion 11Ra to the shaft end portion 11Rb and the movable fins 11A and 11B are moved in conjunction with each other and also rotated by the second link mechanism 36.

According to the embodiment described above, the following advantages can be attained.
(1) The shutter mechanism 12 has the movable fins 11A and 11B arranged in two rows parallel to one other in the up-down direction within the framework of the frame 14. In addition, the shaft end portions 11 La and 11Lb of the movable fins 11A and 11B adjacent to each other in the up-down direction are connected to each other via the first link mechanism 26. Further, the driving force of the actuator 13 is input to the shaft end portion 11Ra on a side opposite to the first link mechanism 26 of the movable fin 11A arranged at the lower row and thereby the series driving force transmission path is formed in the shutter mechanism 12. On the other hand, the second link mechanism 36 connects each of the shaft end portions 11 Ra and 11 Rb of the movable fins 11A and 11B. Thus, the second link mechanism 36 can be moved in conjunction with each of the shaft end portions 11Ra and 11Rb of the movable fins 11A and 11B by being synchronized therewith without abnormal influence on the operation state such as deflection of each movable fin occurring in the driving force transmission path or jamming of foreign matter between the movable fins. Here, the operation state of the shaft end portion 11 Ra of the movable fin 11A can be detected by the ECU 21 controlling the actuator 13. That is, if the rotation of the movable fins 11A and 11 B is inhibited by jamming of the foreign matter, the rotation of at least one of the shaft end portion 11 Ra of the movable fin 11A and the shaft end portion 11 Rb of the movable fin 11B is inhibited. Then, since the operation of the actuator 13 is inhibited, the ECU 21 can detect rotation abnormality of each of the movable fins 11A and 11 B. Therefore, it is possible to accurately confirm the operation state of each of the movable fins with a simple structure without a need to provide a detector such as a limit switch in the shaft end portion 11 Rb of the movable fin 11 B that is on the other end side of the driving force transmission path. In addition, since the second link mechanism 36 can transmit the driving force of the actuator 13 in a path different from the series driving force transmission path, it is possible to further reliably transmit the driving force to each of the movable fins 11A and 11 B.
(2) In addition, the ECU 21 detects the operation amount of the actuator 13 by the pulse signal Sp, which is synchronized with the rotation of the motor 20, input from the pulse sensor 22 provided in the actuator 13. Then, the determination section 23 of the ECU 21 can determine abnormality of each of the movable fins 11A and 11B by the operation amount. Therefore, it is possible to accurately detect the operation state of each of the movable fins 11A and 11 B with a simple structure.
(3) In addition, the determination section 23 of the ECU 21 determines whether the operation amount of the actuator 13 reaches an operation amount corresponding to the fully-open state and the fully-closed state within a predetermined time. Therefore, it is possible to determine whether each of the movable fins 11A and 11B fully opens and fully closes the grille opening portion 7 only by detecting the operation amount of the actuator 13.

Moreover, the aforementioned embodiment may be changed as follows.

· In the aforementioned embodiment, the air flowing from the grille opening portion 7 flows into the engine room 3 formed in the vehicle body 2. However, the configuration is not limited to the embodiment and an intake destination of the air may not be the engine room 3 as long as the intake destination is an inner space of the vehicle body 2 in which the flow rate of the flowing-in air is controllable based on the opening and closing operations of the shutter mechanism 12. That is, for example, it may be a space into which the air flows from the grille opening portion 7 such as a housing of a heat exchanger such as the radiator 5. The grille shutter apparatus 10 of the embodiment may be applied to a vehicle in which an engine is not mounted to an inner space of a vehicle body on the front of a passenger compartment such as a vehicle in which an engine is disposed at a rear portion or a center of a vehicle body, or an electric vehicle.

· In the aforementioned embodiment, the grille opening portion 7 is formed on the lower side of the bumper 8. However, the configuration is not limited to the embodiment and this disclosure may be applied to the grille opening portion 7 formed on the upper side of the bumper 8. That is, the front grille 9 may be an upper grille.

· In the aforementioned embodiment, the first link mechanism 26 and the second link mechanism 36 are formed by the pair of the lever members 26a and 26b, and 36a and 36b fixed to the shaft end portions 11 La and 11Lb of each of the movable fins 11A and 11B, and the link member 26c and the second link member 36c rotatably connected to the end of each of the lever members 26a, 26b, 36a, and 36b. However, the configuration is not limited to the embodiment and forms of the first link mechanism 26 and the second link mechanism 36 configuring the link mechanism may be arbitrarily changed. Then, each of the movable fins 11A and 11B may be configured to be connected by using a link mechanism other than the first link mechanism 26 and the second link mechanism 36, for example, a gear, a pulley, and the like.

· In the aforementioned embodiment, two movable fins 11 (11A and 11 B) are arranged parallel to each other. However, the number of the movable fins is not necessarily limited to the embodiment. That is, the series driving force transmission path is formed as a configuration including three or more movable fins 11 with a configuration, in which the first link mechanism (link and the like) independent for every two adjacent movable fins is provided and the movable fins are moved in conjunction with each other and rotated, and then one end and the other end of the driving force transmission path may be further directly connected by the second link mechanism (link and the like).

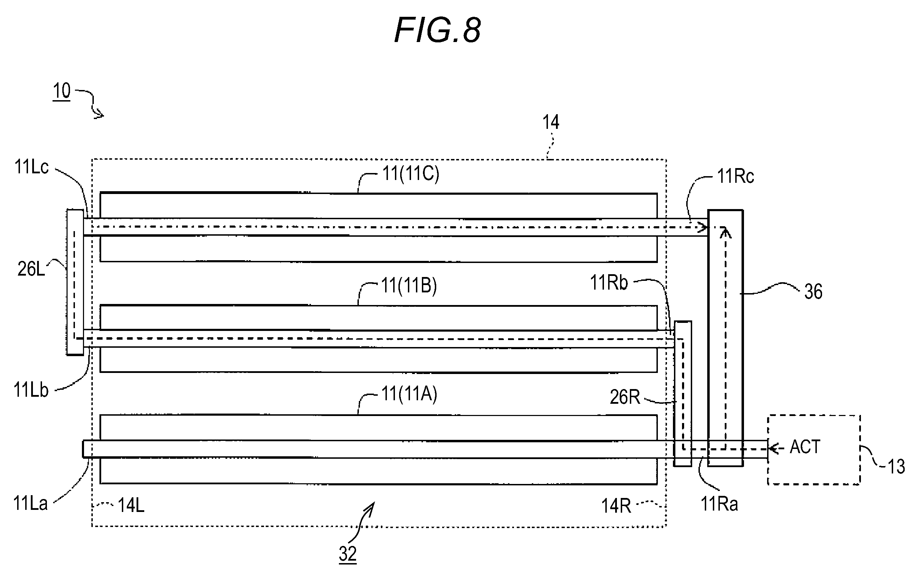

For example, a shutter mechanism 32 illustrated in Fig. 8 has three movable fins 11 A, 11 B, and 11C arranged parallel to each other in the up-down direction within the framework of the frame 14. In the shutter mechanism 32, the shaft end portion 11 Ra of the movable fin 11A and the shaft end portion 11Rb of the movable fin 11 B, and the shaft end portion 11Lb of the movable fin 11B and a shaft end portion 11Lc of the movable fin 11C adjacent in the up-down direction are respectively connected via first link mechanisms 26R and 26L. Furthermore, the actuator 13 is fixed to the sidewall portion 14R of the frame 14 and thereby drives the shaft end portion 11Ra of the movable fin 11A. Then, the shaft end portion 11 Ra of the movable fin 11A and a shaft end portion 11 Rc of the movable fin 11C are directly connected by the second link mechanism 36.

In the configuration described above, a series driving force transmission path leading from the movable fin 11A at the lower row to the movable fin 11 B at a middle row via the first link mechanism 26R and further from the movable fin 11 B at the middle row to the movable fin 11C at the upper row via the first link mechanism 26L is also formed in the shutter mechanism 32 illustrated in Fig. 8. Then, the second link mechanism 36 directly connects the movable fin 11A at the lower row and the movable fin 11C at the upper row not via the series driving force transmission path. Therefore, it is possible to obtain the same advantages as those of the above-described embodiment.

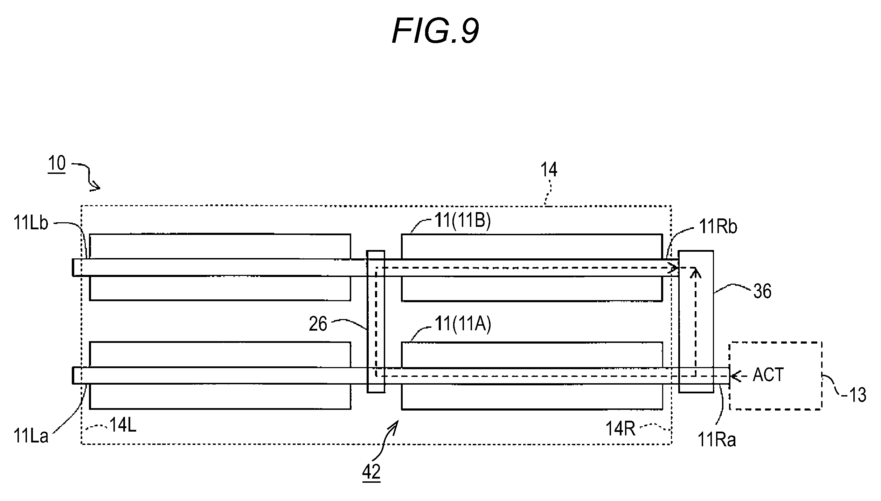

· In the aforementioned embodiment, the first link mechanism 26 connects the shaft end portions 11 La and 11Lb of each of the movable fin 11A and 11B on the outside of the framework of the frame 14. However, the configuration is not limited to the embodiment and as a shutter mechanism 42 illustrated in Fig. 9, the first link mechanism 26 may be disposed within the framework of the frame 14, that is, the first link mechanism 26 may connect intermediate portions in the rotary shaft 15 of each of the movable fins 11A and 11 B.

That is, as long as each of the movable fins is configured to rotate in conjunction with each of the movable fins by including the link mechanism independent for every two adjacent movable fins, the series driving force transmission path is formed irrespective to the arrangement of the link mechanism. However, in a case in which such a configuration is adopted, the rotary shafts 15 of the movable fins 11A and 11 B are desired not to be divided into plural shaft bodies in the longitudinal direction and be in a state of being rotatable relative to each other. Accordingly, it is possible to obtain the same advantages as those of the above-described embodiment.

· In the aforementioned embodiment, the actuator 13 is fixed to the sidewall portion 14R of the frame 14 and drives the shaft end portion 11 Ra of the movable fin 11A on the outside of the framework of the frame. However, the configuration is not limited to the embodiment and the actuator 13 may be specifically disposed within the framework of the frame 14.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A grille shutter apparatus (10) comprising:
a plurality of movable fins (11) that are arranged in parallel and are respectively rotatably supported;
a first link mechanism (26L, 26R) that is independently provided between two adjacent movable fins and forms a series driving force transmission path of both movable fins;
a driving section (13) that is provided at one end of the series driving force transmission path and drives the plurality of movable fins to be rotated;
a control unit (21) configured to control the driving section and detecting an operation state of the driving section; and
a second link mechanism (36) that is connected to the one end and the other end of the series driving force transmission path and is moved in conjunction with the one end and the other end by being synchronized therewith.

2. The grille shutter apparatus according to claim 1,
wherein the plurality of movable fins, the first link mechanism and the second link mechanism comprise a shatter mechanism (12); and
the control unit includes a determination section (23) that detects the operation state of the driving section by an operation amount of the driving section and determines an operation of the shutter mechanism to be abnormal if the operation amount does not reach a predetermined amount.

3. The grille shutter apparatus according to claim 2,
wherein the determination section determines the operation of the shutter mechanism to be abnormal if the operation amount of the driving section does not reach an operation amount corresponding to a fully-open state within a predetermined time from starting of an opening operation of the shutter mechanism and determines the operation of the shutter mechanism to be abnormal if the operation amount of the driving section does not reach an operation amount corresponding to a fully-closed state within a predetermined time from starting of a closing operation of the shutter mechanism.
